# EUROPEAN PATENT SPECIFICATION

(11) **EP 2 500 985 B1**
(45) Date of publication and mention of the grant of the patent: **09.08.2017**
(21) Application number: 12001107.7
(22) Date of filing: 20.02.2012
(51) Int. Cl.: H01R 13/504, H01R 43/18, H01R 43/24, B29C 45/14, H02G 3/00, B29C 45/33, B29L 31/36, H01R 13/405

(54) **Device connector and production method therefor**
Vorrichtungsverbinder und Herstellungsverfahren dafür
Connecteur de dispositif et son procédé de production

(30) Priority: 15.03.2011 JP 2011056337
(43) Date of publication of application: 19.09.2012
(73) Proprietor: Sumitomo Wiring Systems, Ltd., Yokkaichi-city, Mie 510-8503 (JP)
(72) Inventor: Tate, Takuya, Yokkaichi-city Mie 510-8503 (JP); Matsuoka, Hiroyuki, Yokkaichi-city Mie 510-8503 (JP)
(74) Representative: Müller-Boré & Partner Patentanwälte PartG mbB

(56) References cited:
- EP-A1- 1 587 183
- GB-A- 2 233 596
- JP-A- 2009 032 500
- US-A- 6 076 258

## Description

The present invention relates to a device connector and to a production or molding method therefor.

A device connector to be connected to a device such as a motor installed in an electric vehicle or a hybrid vehicle is, for example, known Japanese Unexamined Patent Publication No. 2009-32500. This device connector includes a plurality of metal busbars for connecting device-side terminals provided in the device and wire-side terminals provided on power feeding wires, and a molded resin portion covering these busbars.

Since insert molding is performed with the plurality of busbars bent into complicated shapes arranged side by side in the above device connector, a demolding structure for the molded resin portion becomes complicated and suitable boring cannot be performed on the molded resin portion. Thus, voids (small clearances) may be produced in a thick part of the molded resin portion, and cracks may be formed due to the voids and the waterproof property of the device connector may be reduced. Accordingly, it is being studied to suppress the formation of voids in the molded resin portion by forming a plurality of cores by primary molding to individually cover parts of the respective busbars by a primary molded portion, setting the plurality of cores in a secondary molding die while holding them in contact side by side and further covering the primary molded portion by a secondary molded portion.

However, when the cores are set in the secondary molding die and molding resin is injected into the secondary molding die, the cores rotate about the axis lines of the busbars due to the influence of an injection pressure of the molding resin and the secondary molded portion may be formed with the cores displaced.

US 6 076 258 A discloses method for insert molding comprising the steps of assembling inserts to two holders, the holders having a support for the insert, joining the two holders by a joint portion, setting the assembled inserts and holders inside a metal mold; and casting resin into the metal mold.

The present invention was completed in view of the above situation and an object thereof is to improve production of a device connector.

This object is solved according to the invention by the features of the independent claims. Particular embodiments of the invention are subject of the dependent claims.

Accordingly, it is possible to suppress displacements of cores and/or suppress the formation of voids and cracks in a molded resin portion so that production of the connector is improved.

According to one aspect of the invention, there is provided a device connector according to claim 1 in which a plurality of metal conductors connected to device-side terminals provided in a device are made integral by a molded resin portion made of synthetic resin, comprising a plurality of cores in which the conductors are made integral to a primary molded portion; a metal plate to be attached and fixed to the device; and a secondary molded portion integrally forming the plurality of cores held in contact substantially side by side and the metal plate; wherein the molded resin portion is composed of or comprises the primary molded portion and the secondary molded portion; and a contact portion is provided between a pair of adjacent cores and the pair of adjacent cores are held in contact via the contact portion in two or more directions including an injection direction of molding resin.

According to the thus constructed device connector, the formation of voids in the molded resin portion formed to be thick by one molding can be suppressed since the molded resin portion can be formed in separate steps for forming the primary molded portion and the secondary molded portion. Further, since the primary molded portion is formed while being further divided, the formation of voids can be further suppressed. Furthermore, parts of the contact portion of the adjacent cores come into contact in at least two directions, thereby being able to suppress displacements of the cores due to rotation or the like. In this way, the secondary molded portion can be formed with the respective conductors positioned at proper positions.

The present invention is preferably embodied to have the following constructions.

Parts of the contact portion which come into contact with each other may be each formed by a first intersecting surface intersecting with the injection direction and a second intersecting surface extending in the injection direction.

Furthermore, the first intersecting surfaces of the pair of adjacent cores may substantially come into surface contact with each other and/or the second intersecting surfaces thereof may substantially come into surface contact with each other when the molding resin for forming the secondary molded portion is injected into a secondary molding die.

According to this construction, displacements of the respective cores resulting from an injection pressure of the molding resin can be suppressed only by bringing the first intersecting surfaces into surface contact with each other and/or the second intersecting surfaces into surface contact with each other without providing any contact portion having a complicated structure.

The parts of the contact portion that come into contact with each other may be each formed into a cranked shape by connecting the first intersecting surface and the second intersecting surface.

According to this construction, in setting the respective cores in the secondary molding die, the respective cores can be set without the parts of the contact portion being engaged with each other through mating engagement, and a process of assembling the cores can be simplified. Further, a primary molding die for forming the primary molded portion can be simplified and production cost of the primary molding die can be reduced.

The contact portion is formed between the pair of adjacent cores while a resin entering space into which the molding resin for forming the secondary molded portion can at least partly enter is formed therebetween.

When the plurality of cores are set in contact without any clearances in the die for forming the secondary molded portion, a straight part extending in an arrangement direction of the cores is formed on the primary molded portion. Thus, the length of the secondary molded portion covering the straight part of the primary molded portion increases, and the amount of shrinkage thereof also increases. When the secondary molding resin is cooled and solidified, the primary molded portion may be squashed by the shrinkage of the secondary molded portion. In this respect, according to the above construction, the straight part of the primary molded portion is divided into a plurality of parts by the resin entering space, wherefore the lengths of parts of the secondary molded portion individually covering the respective straight parts of the primary molded portion can be respectively made shorter.

At least one resin entering space, into which molding resin for forming the secondary molded portion can at least partly enter, may be arranged to cross a straight part of the primary molded portion extending in an arrangement direction of the conductors in the primary molded portion before the secondary molded portion is formed.

The resin entering space may be at least partly formed between a pair of adjacent conductors.

According to another aspect of the invention, there is provided a production or molding method for producing a device connector, according to claim 7 in particular according to the above aspect of the invention or a particular embodiment thereof, in which a plurality of metal conductors connected to device-side terminals provided in a device are made integral by a molded resin portion comprising a primary molded portion and a secondary molded portion, comprising the following steps: molding a plurality of cores in which the conductors are made integral to the primary molded portion; and molding the secondary molded portion integrally forming the plurality of cores held in contact substantially side by side and a metal plate to be attached and fixed to the device; wherein a contact portion is provided between a pair of adjacent cores and the pair of adjacent cores are held in contact via the contact portion in two or more directions including an injection direction of molding resin.

The contact portion is formed between the pair of adjacent cores while a resin entering space into which the molding resin for forming the secondary molded portion can at least partly enter is formed therebetween.

The present invention is preferably embodied as follows.

Parts of the contact portion which come into contact with each other may be each formed by a first intersecting surface intersecting with the injection direction and a second intersecting surface extending in the injection direction.

The first intersecting surfaces of the pair of adjacent cores substantially may come into surface contact with each other and/or the second intersecting surfaces thereof substantially come into surface contact with each other when the molding resin for forming the secondary molded portion is injected into a secondary molding die.

The parts of the contact portion that come into contact with each other may be each formed into a cranked shape by connecting the first intersecting surface and the second intersecting surface.

At least one resin entering space, into which molding resin for forming the secondary molded portion at least partly can enter, may be arranged to cross a straight part of the primary molded portion extending in an arrangement direction of the conductors in the primary molded portion before the secondary molded portion is formed.

The resin entering space may be at least partly formed between a pair of adjacent conductors.

According to the above, it is possible to suppress displacements of cores and suppress the formation of voids and cracks in a molded resin portion.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a terminal block according to an embodiment,
FIG. 2 is a front view of the terminal block according to the embodiment,
FIG. 3 is a plan view of the terminal block according to the embodiment,
FIG. 4 is a perspective view showing a state where a shielding shell is mounted on the terminal block according to the embodiment,
FIG. 5 is a section along V-V of FIG. 2,
FIG. 6 is a section along VI-VI of FIG. 3,
FIG. 7 is a section along VII-VII of FIG. 2,
FIG. 8 is a perspective view showing a state where three cores are arranged in contact,
FIG. 9 is a plan view showing the state where the three cores are arranged in contact,
FIG. 10 is a plan view showing a state where the three cores are arranged while being spaced apart,
FIG. 11 is a side view of the left core,
FIG. 12 is a section showing a state where the cores are held by upper and lower dies and a slide die,
FIG. 13 is a section showing a state where a secondary molded portion is formed in the upper and lower dies and the slide die,
FIG. 14 is a plan view of a contact portion according to a first modification when viewed from above,
FIG. 15 is a plan view of a contact portion according to a second modification when viewed from above,
FIG. 16 is a plan view of a contact portion according to a third modification when viewed from above, and
FIG. 17 is a plan view of a contact portion according to a fourth modification when viewed from above.

### <Embodiment>

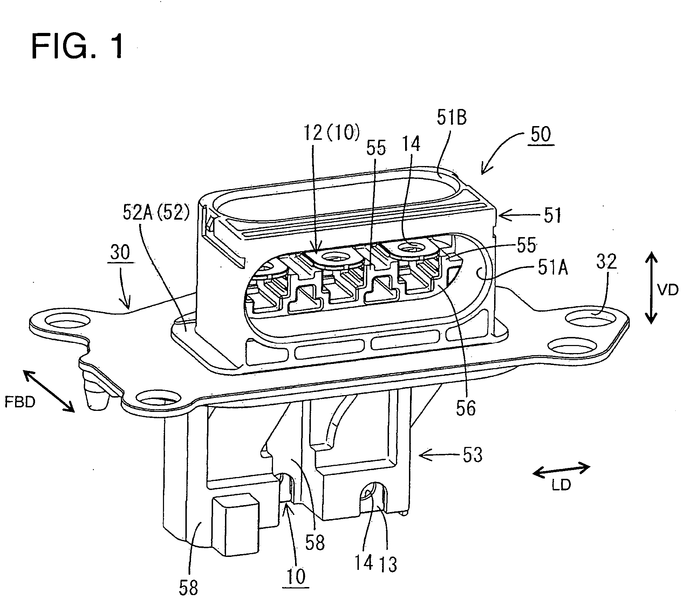

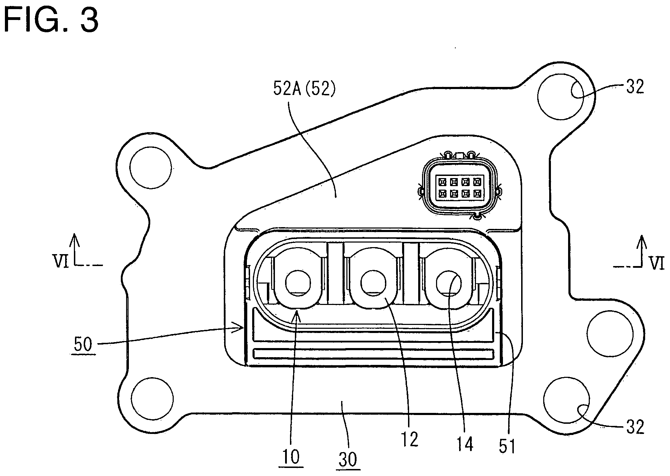

One particular embodiment of the present invention is described with reference to FIGS. 1 to 13.

In this embodiment, a terminal block to be attached to a metal motor case (not shown) housing a motor (as an example of a "device") inside is illustrated as an example of a device connector. As shown in FIG. 1, this terminal block includes a metal plate 30 to be attached and fixed to the motor case, a connector housing 50 molded to be integral to the metal plate 30, and one or more (e.g. three) conductive plates 10 held or housed in the connector housing 50 particularly while penetrating through the metal plate 30 in a plate thickness direction TD. Note that the connector housing 50 particularly corresponds to a molded resin portion and the one or more conductive plates 10 particularly correspond to conductors.

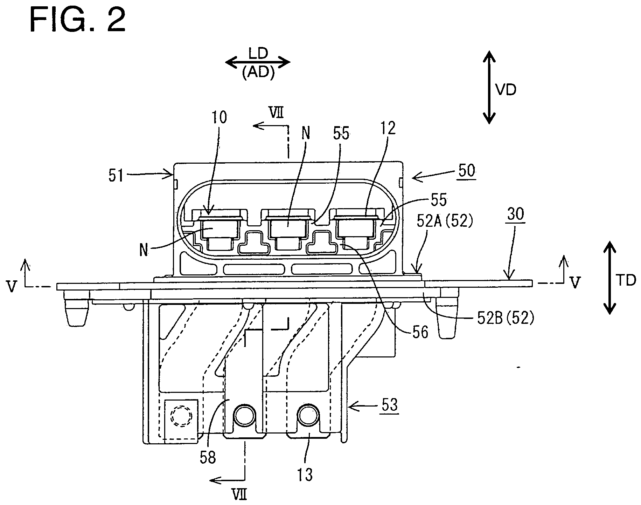

One ore more one ends (first ends) of the conductive plates 10 are to be connected (particularly bolt-fastened) to one or more, particularly a plurality of unillustrated device-side busbars provided in or at the motor case for electrical connection. On the other hand, in a power supply device for supplying power such as an inverter, one or more, particularly a plurality of wires are arranged to substantially extend toward the motor case and an unillustrated wire-side connector is provided at end portions of these one or more wires. One or more wire-side terminals connected to respective wire ends are provided in this wire-side connector, and these one or more wire-side terminals are connected (particularly bolt-fastened) to the one or more other ends of the respective conductive plates 10 for electrical connection. Note that, in the following description, a vertical direction VD is a vertical direction in FIG. 2 and a lateral direction is a lateral direction LD in FIG. 2.

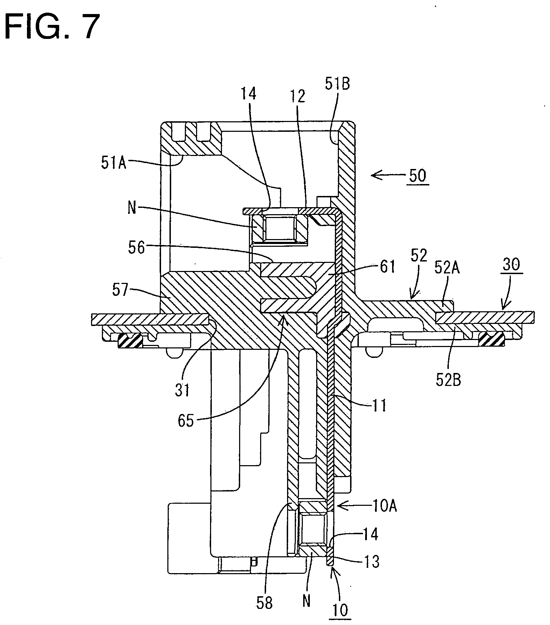

The (particularly each) conductive plate 10 is formed by, after a conductive (particularly metal) plate with good electrical conductivity is punched or cut into a specified (predetermined or predeterminable) shape particularly by a press, performing a specified (predetermined or predeterminable) bending process on the punched or cut conductive (metal) plate as shown in FIG. 7. The conductive plate 10 includes a terminal main portion 11 constituting or forming part of a main part of the conductive plate 10, a wire-side fastening portion 12 extending laterally or forward from the lateral or upper end of the terminal main portion 11, and a device-side fastening portion 13 provided at a lower end portion of the terminal main portion. The terminal main portion 11 particularly is formed to be longer than the wire-side fastening portion 12.

As shown in FIG. 2, the plurality of (e.g. three) conductive plates 10 particularly are arranged substantially side by side in the lateral direction LD. Further, the terminal main portions 11 particularly are slightly cranked in the lateral direction LD at intermediate positions. The wire-side fastening portions 12 and the device-side fastening portions 13 are each formed with a bolt insertion hole 14 through which an unillustrated fastening bolt at least partly is insertable.

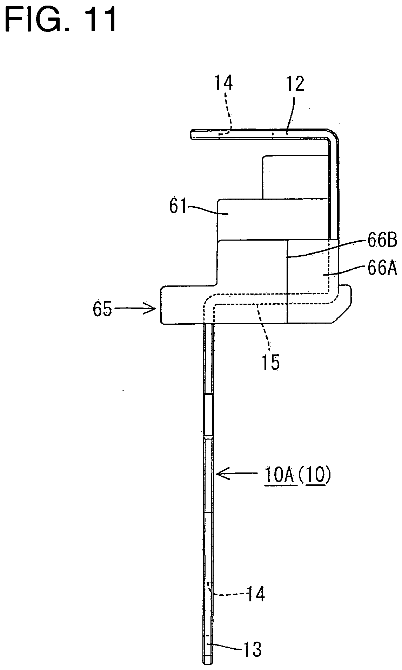

The terminal main portion 11 of the conductive plate 10A (particularly arranged in the center or intermediate position out of the three conductive plates 10) substantially extends in the vertical direction VD and/or is substantially flat as shown in FIG. 7. As shown in FIG. 11, the lateral terminal main portions 11, 11 (particularly of the both conductive plates 10B, 10B located at the opposite left and right sides out of the three conductive plates 10) include each a folded portion 15 bent forward to face the wire-side fastening portion 12 at an intermediate part (particularly at a substantially vertically central part) of the terminal main portion 11, and the front end of this folded portion 15 is bent downward particularly substantially at the same position as the front end of the wire-side fastening portion 12.

The metal plate 30 particularly is made of a metal flat plate material as a base material and includes an opening 31 formed to penetrate in a plate thickness direction TD of the plate material. The connector housing 50 includes a wire-side fitting portion 51 arranged to vertically penetrate through the opening 31, molded to be integral to the metal plate 30 and arranged above the metal plate 30, a (particularly substantially plate-like) flange 52 arranged at the height position of the metal plate 30 and bulging out sideways, and a device-side fitting portion 53 arranged below the metal plate 30.

As shown in FIG. 1, the wire-side fitting portion 51 particularly substantially is in the form of a box long in the lateral direction and includes a front end opening 51 A (as a particular first opening) which is open in one direction (e.g. forward) and an upper end opening 51 B (as a particular second opening) which is open in another direction (e.g. upward). The unillustrated wire-side connector at least partly is fittable or insertable into the wire-side fitting portion 51 through the front end opening 51A of the wire-side fitting portion 51.

As shown in FIG. 2, one or more (e.g. three) nut accommodating portions 55 are formed (particularly substantially side by side in the lateral direction LD) in the wire-side fitting portion 51. These one or more (e.g. three) nut accommodating portions 55 are respectively open to two sides such as forward and upward. Further, all the three nut accommodating portions 55 is/are arranged to substantially face (particularly forward) through the front or first end opening 51 A and substantially face (particularly upward) through the upper or second end opening 51 B. One or more nuts N press-fitted through the front end opening 51A from front particularly are so accommodated in the nut accommodating portions 55 that the axis lines of the nuts N are aligned with the vertical direction VD.

The wire-side fastening portions 12 of the conductive plates 10 are arranged to close the upper end openings of the nut accommodating portions 55 as shown in FIGS. 1 and 2. Further, as shown in FIG. 7, each conductive plate 10 is arranged to penetrate through the opening 31 in the vertical direction VD and so held in the connector housing 50 that the wire-side fastening portion 12 is substantially arranged around the bolt insertion hole 14 and at least partly exposed forward and/or upward in the wire-side fitting portion 51 and, on the other hand, the device-side fastening portion 13 is substantially arranged around the bolt insertion hole 14 and at least partly exposed backward at the lower end portion of the device-side fitting portion 53. Each wire-side fastening portion 12 is at least partly exposed to the outside through the upper end opening 51 B of the wire-side fitting portion 51. That is, the upper end opening 51 B of the wire-side fitting portion 51 particularly is or may be used as a service hole used to at least partly insert a tool or the like for a bolt fastening operation. The wire-side terminal is substantially placed on the wire-side fastening portion 12 and the tool is inserted inside through the upper end opening 51 B to threadably engage the fastening bolt with the nut N, whereby the conductive plate 10 and the wire-side terminal are electrically connected. Note that an unillustrated service cover is mounted on or to the upper end opening 51 B of the wire-side fitting portion 51 after bolt fastening, thereby closing the upper end opening 51 B.

An escaping recess 56 for allowing a leading end part of the fastening bolt penetrating through the nut N to escape when the fastening bolt is fastened to the nut N is provided below each nut accommodating portion 55. The escaping recess 56 particularly is formed to be narrower than the nut accommodating portion 55 in the lateral direction LD and integrally or unitarily formed with the nut accommodating portion 55 by a slide die 220 to be described later.

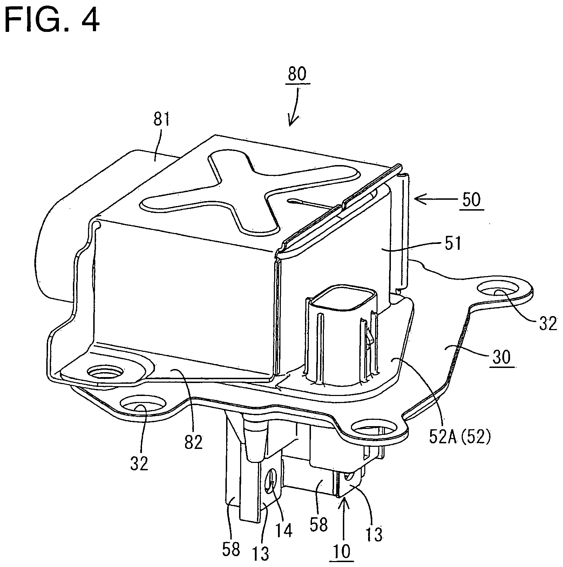

As shown in FIG. 4, a metal shielding shell 80 at least partly covering the wire-side fitting portion 51 except the rear surface is mounted on the wire-side fitting portion 51. This shielding shell 80 is formed by, after a conductive (particularly metal) plate with good electrical conductivity is punched or cut into a specified (predetermined or predeterminable) shape particularly by a press, performing a specified (predetermined or predeterminable) bending process on the punched or cut conductive (metal) plate. The shielding shell 80 includes a (particularly braided) fixing portion 81 having a laterally long cylindrical shape and adapted to crimp a braided wire, which is provided to collectively cover shielded conductive paths of the wire-side connector, against a crimp ring, and a fixing piece 82 for fixing the shielding shell 80 to the metal plate 30 and electrically connecting the shielding shell 80 and the metal plate 30.

Since the flange 52 particularly is formed to be integral to the metal plate 30 in a range not reaching an outer peripheral edge portion of the metal plate 30, the outer peripheral edge portion of the metal plate 30 particularly is exposed. Further, a wire-side flange 52A at a side of the wire-side fitting portion 51 is formed to extend in the lateral direction LD and backward direction, and a device-side flange 52B at a side of the device-side fitting portion 53 is formed to substantially cover a surface of the metal plate 30 at the side of the device-side fitting portion 53.

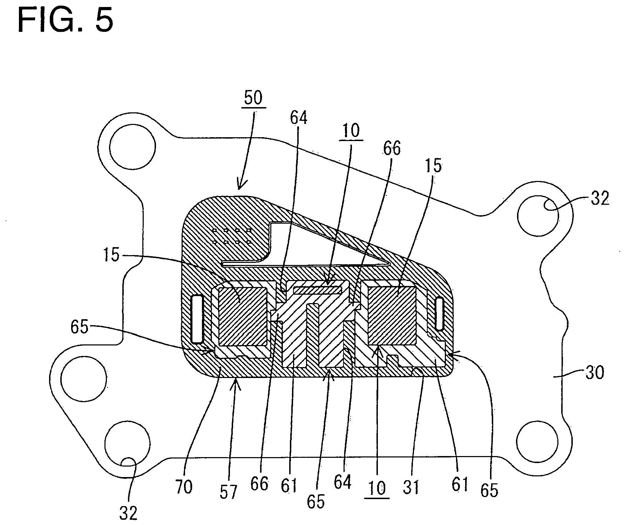

The opening 31 has particularly a substantially trapezoidal shape. Further, the folded portions 15 of the conductive plates 10 at the lateral (left and/or right) side(s) particularly out of the three conductive plates 10 are arranged in the opening 31. On the other hand, a thick portion 57 as a thick resin layer is formed particularly from a lower end portion of the wire-side fitting portion 51 to an upper end portion of the device-side fitting portion 53 as shown in FIGS. 5 to 7. That is, the one or more (e.g. three) conductive plates 10 having a complicated shape are arranged to penetrate through the opening 31 of the metal plate 30 in this thick portion 57.

Further, one or more, particularly a plurality of mounting holes 32 are formed in the outer peripheral edge portion of the metal plate 30. Unillustrated one or more fixing bolts or rivets are at least partly inserted through these mounting holes 32 and fastened to the motor case, whereby the terminal block can be attached and fixed to the motor case.

The device-side fitting portion 53 is housed into the motor case when the terminal block is fixed to the motor case. Further, as shown in FIG. 1, one or more (e.g. three) nut accommodating portions 58 are formed in the device-side fitting portion 53. Specifically, out of these nut accommodating portions 58, the nut accommodating portion 58 located in the center or at an intermediate position is arranged behind the other nut accommodating portions 58. In the nut accommodating portions 58 of the device-side fitting portion 53, the fastening bolts are threadably engaged with respective nuts N to electrically connect the conductive plates 10 and the device-side busbars similar to the nut accommodating portions 55 of the wire-side fitting portion 51. In this way, the wire-side terminals and the device-side busbars are electrically connected using the conductive plates 10 as intermediate terminals.

The connector housing 50 particularly is composed of a primary molded portion 61 made e.g. of synthetic resin and molded to be integral or unitary to the one or more (e.g. three) conductive plates 10 by primary molding and a secondary molded portion 70 made e.g. of synthetic resin and molded to be integral or unitary to the primary molded portion 61 by secondary molding, and particularly formed in two separate processes.

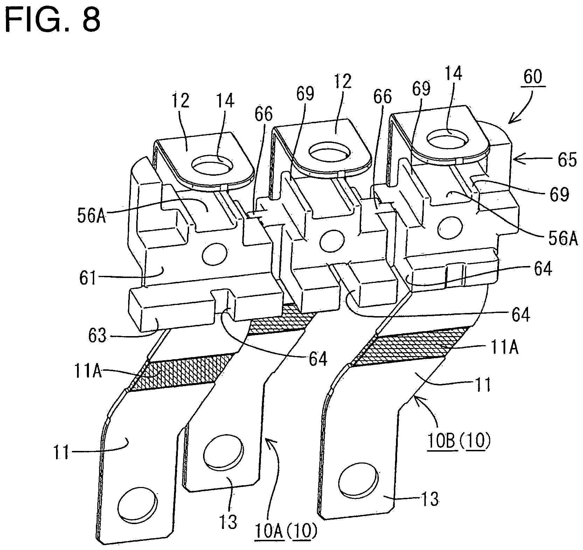

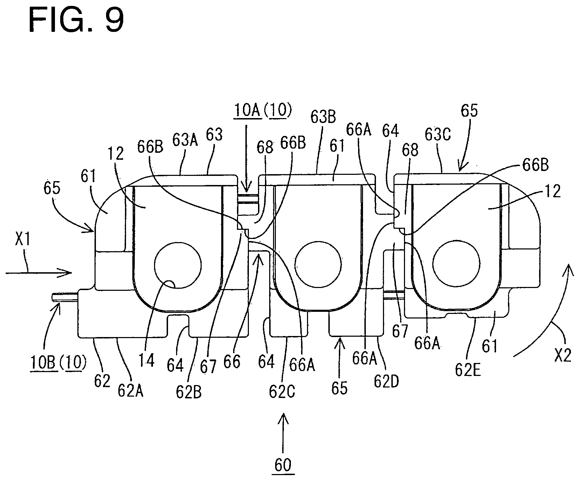

A primary molded article 60 formed by primary molding is composed of or comprises the one or more (e.g. three) conductive plates 10 and the primary molded portion 61 made of synthetic resin and covering parts of the terminal main portions 11 of the (three) conductive plate(s) 10. As shown in FIGS. 8 and 9, the (three) conductive plate(s) 10 is/are held in the primary molded portion 61 while particularly being arranged at equal intervals in the lateral direction.

As shown in FIG. 8, the primary molded portion 61 particularly is roughly in the form of a block having a substantially rectangular shape longer in the lateral direction LD when viewed from above, and at least partly covers substantially vertical central or intermediate parts of the terminal main portions 11 of the respective conductive plates 10 (particularly substantially over the entire circumference). The terminal main portion 11 of the conductive plate 10A located in the center or intermediate position is covered while vertically penetrating through a rear part of the primary molded portion 61, and the terminal main portions 11 of the conductive plates 10B located at the lateral (left and/or right) side(s) is/are covered in the rear part of the primary molded portion 61 and the folding portion(s) 15 thereof is/are covered in a lower part of the primary molded portion 61 as shown in FIG. 11. In other words, as shown in FIGS. 1 and 11, the primary molded portion 61 particularly at least partly covers cranked parts of the terminal main portions 11 of the respective conductive plates 10, and these covered parts are subject to an injection pressure of molding resin injected from the lateral (e.g. left) side. Note that one or more sealing portions 11 A where an adhesive is to be applied are provided below the parts of the terminal main portions 11 of the respective conductive plates 10 covered by the primary molded portion 61 and/or adhere to the secondary molded portion 70 to prevent the entrance of water or the like into the connector housing 50 when the secondary molded portion 70 is formed.

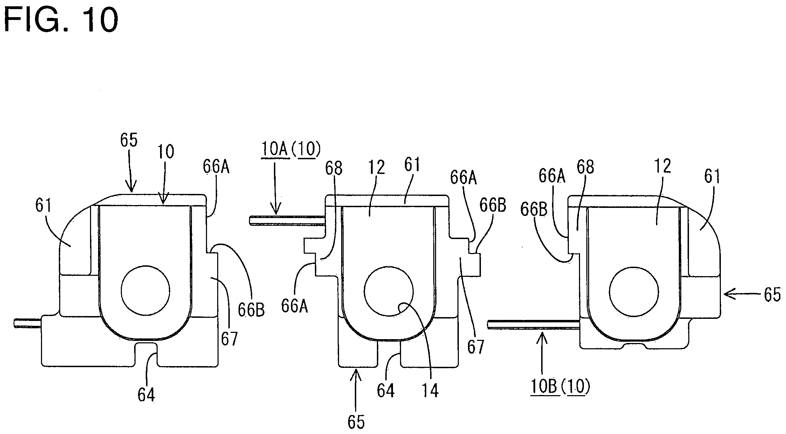

Further, one or more resin entering spaces 64 into which molding resin can at least partly enter when the secondary molded portion 70 is formed are formed to extend in forward and backward directions FBD (directions crossing an arrangement direction AD of the conductive plates 10) in a front end surface 62 and a rear end surface 63 of the primary molded portion 61 extending (particularly substantially straight) in the lateral direction LD as shown in FIGS. 9 and 10. These resin entering spaces 64 particularly have each a substantially rectangular plan view and/or are at least partly formed between the adjacent conductive plates 10 in the primary molded portion 61, in a part corresponding to the left conductive plate 10B in the primary molded portion 61 and/or in a part corresponding to the conductive plate 10A located in the center or intermediate position in the front end surface of the primary molded portion 61. Further, the resin entering spaces 64 provided between the adjacent conductive plates 10 particularly are formed to be longer in forward and backward directions FBD than the resin entering spaces 64 provided in correspondence with the conductive plates 10. The resin entering spaces 64 at least partly provided between the adjacent conductive plates 10 are so formed that intermediate or substantially central parts (contact portions 66) of the primary molded portion 61 in forward and backward directions FBD particularly are left at the back ends of the resin entering spaces 64. That is, a straight part of the front end surface 62 of the primary molded article 60 substantially extending in the lateral direction LD is divided by the resin entering spaces 64 as shown in FIG. 9, with the result that the front end surface 62 is composed of straight parts 62A, 62B, 62C, 62D and 62E substantially extending in the lateral direction LD one after another. Thus, the lengths of the respective straight parts 62A, 62B, 62C, 62D and 62E substantially extending in the lateral direction LD one after another are shorter than the length of the straight part continuously substantially extending in the lateral direction LD when the front end surface 62 of the primary molded article 60 is not divided by the resin entering spaces 64.

Similar to the front end surface 62, a substantially straight part of the rear end surface 63 of the primary molded article 60 substantially extending in the lateral direction LD particularly is also divided by the resin entering spaces 64, with the result that the rear end surface 63 is composed of substantially straight parts 63A, 63B and 63C substantially extending in the lateral direction LD one after another. The lengths of the respective straight parts 63A, 63B and 63C substantially extending in the lateral direction LD one after another particularly are shorter than the length of the substantially straight part continuously substantially extending in the lateral direction LD when the rear end surface 63 of the primary molded article 60 is not divided by the resin entering spaces 64.

Further, as shown in FIG. 9, two or more (e.g. three) cores 65, 65, 65 particularly are in contact in the lateral direction LD in the primary molded article 60.

The respective cores 65, 65, 65 can be divided at the resin entering spaces 64 provided between the adjacent conductive plates 10, 10, and the adjacent cores 65, 65 particularly are connected in the lateral direction LD by the contact portion 66 formed at the back ends of the resin entering spaces 64. In other words, the adjacent cores 65, 65 particularly are in contact in the lateral direction LD via the contact portion 66.

The contact portion 66 is composed of or comprises a first linking portion 67 substantially extending laterally (e.g. to the right) from the primary molded portion 61 of the core 65 located on the lateral (left) side and a second linking portion 68 substantially extending laterally (e.g. to the left) from the primary molded portion 61 of the core 65 located on the opposite lateral (right) side.

The respective linking portions 67, 68 particularly are at an angle different from 0° or 180°, preferably substantially perpendicular to an injection direction (lateral direction LD) and particularly include each two first surfaces (as an example of a "first intersecting surface") 66A displaced in the lateral direction LD and a second surface (as an example of a "second intersecting surface") 66B located between the two first surfaces 66A, 66A and at an angle different from 0° or 180°, preferably substantially perpendicular to the first surfaces 66A, and the two first surfaces 66A, 66A and the second surface 66B particularly are connected in a cranked manner. The two first surfaces 66A, 66A of the linking portion 67 and the two first surfaces 66A, 66A of the linking portion 68 particularly are in surface contact in the injection direction, and/or the second surface 66B of the linking portion 67 and the second surface 66B of the linking portion 68 particularly are in surface contact in a direction at an angle different from 0° or 180°, preferably substantially perpendicular to the injection direction. That is, parts of the respective linking portions 67, 68 held in surface contact with each other form a cranked shape obtained by connecting the two surfaces 66A and the second surface 66B as shown in FIG. 9, and the adjacent cores 65, 65 particularly are held in surface contact with each other in forward and backward directions FBD and lateral direction LD.

One or more, particularly a pair of tightly holding portions 69, 69 (particularly substantially facing each other in the lateral direction LD and) standing upward are provided on the top of each core 65 as shown in FIG. 8. The (pairs of) tightly holding portion(s) 69 substantially extend(s) in forward and backward directions FBD, and tightly hold(s) the slide die 220 for forming the nut accommodating portions 55 and the escaping recesses 56 of the connector housing 50 (particularly from substantially opposite lateral sides) when secondary molding is performed. A bottom wall 56A connecting the lower ends of the tightly holding portions 69, 69 is provided adjacent to the tightly holding portion(s) 69, 69, particularly at least partly between the pair of tightly holding portions 69, 69. A length from the bottom walls 56A to the wire-side fastening portions 12 arranged above the nut accommodating portions 55 particularly is set to be substantially equal to a length which is the sum of the heights of the nut accommodating portions 55 and the escaping recesses 56 in the connector housing 50, and/or the wire-side fastening portions 12 and the bottom walls 56A tightly hold the slide die 220 from upper and lower sides when secondary molding is performed.

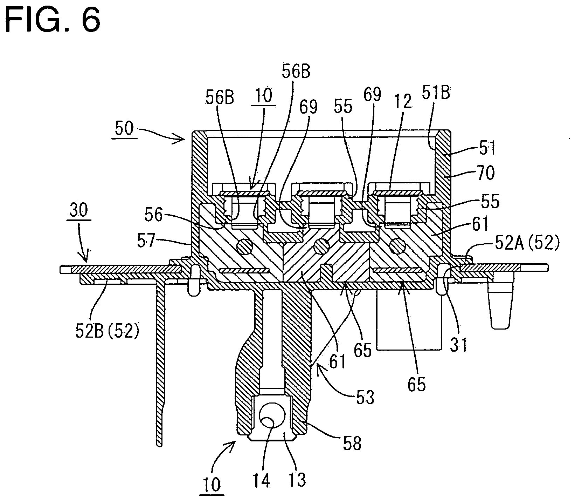

The secondary molded portion 70 formed by secondary molding is such that the primary molded portion 61 of the primary molded article 60 penetrates through the opening 31 of the metal plate 30 in forward and backward directions FBD as shown in FIGS. 5 and 6, and/or constitutes or forms part of the above connector housing 50 together with the primary molded portion 61. At the time of secondary molding, molten molding resin to be molded into the secondary molded portion 70 at least partly enters the resin entering spaces 64 of the primary molded article 60 and substantially flows to the both upper and lower surfaces of the metal plate 30, whereby the primary molded article 60 and the metal plate 30 are integrally formed. That is, the formation of voids in the thick portion 57 of the connector housing 50 is suppressed or reduced by arranging the primary molded portion 61 of the primary molded article 60 in the thick portion 57 of the connector housing 50 and forming the thick portion 57, which is thickest in the connector housing 50, in the primary molded portion 61 and the secondary molded portion 70. This can prevent crack formation in the thick portion 57 due to voids and a reduction in the waterproof property of the terminal block. Further, since the primary molded article 60 particularly is formed as three separate parts for the respective conductive plates 10, the formation of voids in the primary molded portion 61 can be further suppressed.

The terminal block of this embodiment is structured as described above. Next, a production method of the secondary molded portion 70 and functions and effects thereof are described.

First, the respective cores 65, 65, 65 are set one next to another in the lateral direction LD in a lower die 210 of first and second (upper and lower) dies 200, 210, which are opened (particularly substantially in the vertical direction VD) for secondary molding, while being held in surface contact at the respective contact portions 66. At this time, since the adjacent cores 65, 65 can be set in the lower die 210 only by bringing the respective cranked linking portions 67, 68 into surface contact in forward and backward directions FBD and lateral direction LD, a process of setting the cores 65 in the lower die 210 can be simplified as compared with the case where the linking portions are engaged with each other such as by mating engagement. Further, as compared with the case where the respective linking portions 67, 68 are formed as projections and recesses, a die for forming the primary molded portion 61 can be simplified and production cost of the die for primary molding can be reduced.

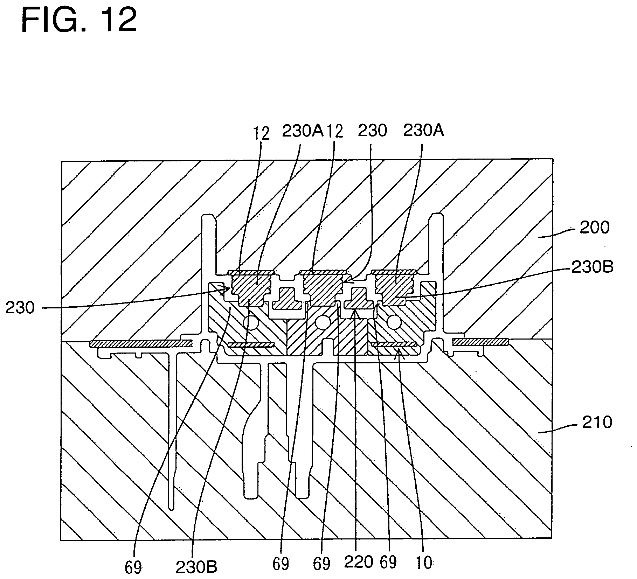

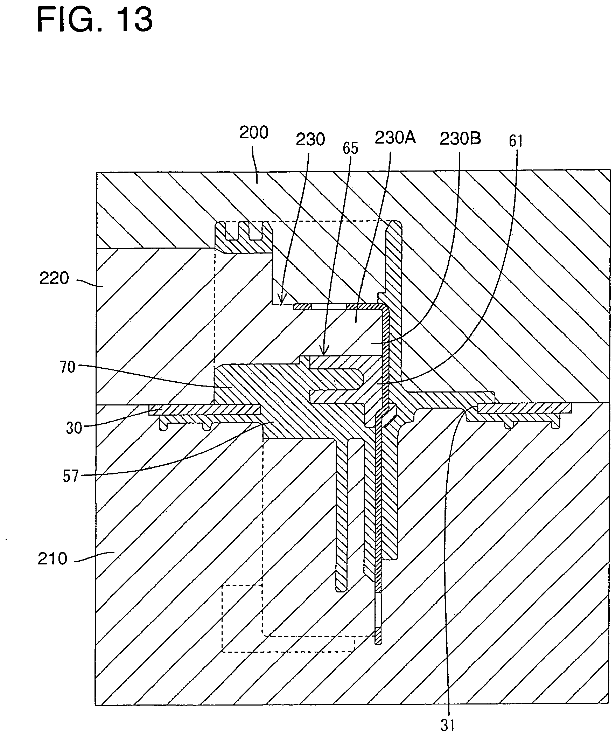

When all the cores 65 are set in the lower die 210, the slide die 220 is inserted from front into spaces substantially enclosed by the pairs of tightly holding portions 69, 69 of the respective cores 65, 65, 65, the wire-side fastening portions 12 and the bottom walls 56A and the die is so clamped that the upper and lower dies 200, 210 particularly sandwich all the cores 65 from the upper and lower sides as shown in FIG. 13. At this time, the slide die 220 is so assembled as to be tightly held from the lateral (left and right) sides by the one or more, particularly the pairs of tightly holding portions 69, 69 and/or from the upper and lower sides by the wire-side fastening portions 12 and the bottom walls 56A. Specifically, as shown in FIGS. 12 and 13, the slide die 220 includes one or more (e.g. three) molding pins 230 each composed of or comprising a nut accommodating portion forming portion 230A and an escaping recess forming portion 230B narrower than the nut accommodating portion forming portion 230A in the lateral direction LD and the escaping recess forming portions 230B particularly are tightly held from the lateral (left and/or right) sides by the pairs of the tightly holding portions 69, 69 of the primary molded portion 61. Note that the upper and lower dies 200, 210 and the slide die 220 particularly correspond to a secondary molding die.

Subsequently, the secondary molded portion 70 is formed by injecting molten molding resin, for example, from the back side to the front side of the plane of FIG. 13 from an unillustrated gate provided at a lateral side of the upper and lower dies 200, 210, thereby forming the connector housing 50 as shown in FIG. 13. At this time, the molding resin particularly is received by the left surface of the primary molded portion 61 in the respective cores 65, 65, 65, and the respective cores 65, 65, 65 try to move in an injection direction X1 of the molding resin and in a counterclockwise rotational direction X2 about the centers of the axis lines of the conductive plates 10 as shown in FIG. 9. However, since the respective cores 65, 65, 65 particularly are connected in surface contact with each other by the contact portions 66 (first surfaces 66A) according to this embodiment, all the cores 65 become integral, thereby resisting the injection pressure of the molding resin and suppressing displacements of the respective cores 65, 65, 65 in the injection direction. Further, also against a rotational force in a clockwise direction opposite to the direction X2, the contact portions 66 (second surfaces 66B) particularly come into surface contact in forward and backward directions FBD, thereby being able to restrict clockwise rotational forces about the axis centers of the conductive plates 10 and suppress displacements of the respective cores 65, 65, 65.

Further, since the respective cores 65, 65, 65 particularly tightly hold the slide die 220 in vertical and lateral directions using the pairs of tightly holding portions 69, 69, the wire-side fastening portions 12 and the bottom walls 56A, displacements of the respective cores 65, 65, 65 in the injection direction particularly can be further suppressed and vertical displacements thereof can also be suppressed. This can suppress displacements of the respective conductive plates 10 resulting from displacements of the respective cores 65, 65, 65. Note that the pairs of the tightly holding portions 69, 69 of the respective cores 65, 65, 65 in the primary molded portion 61 form pairs of inner walls 56B, 56B facing each other in the escaping recesses 56 of the connector housing 50 together with the secondary molded portion 70 as shown in FIG. 6.

The secondary molded portion 70 formed as described above is cured by being cooled, and forms the connector housing 50 together with the primary molded portion 61. In this cooling process, the secondary molded portion 70 is cured and shrinks to squash the part of the primary molded portion 61 covered thereby. However, in this embodiment, the straight parts of the front and rear end surfaces 62, 63 of the primary molded portion 61 particularly are divided by the resin entering spaces 64, and the lengths of the parts of the secondary molded portion 70 individually covering the respective straight parts 62A, 62B, 62C, 62D, 62E, 63A, 63B and 63C of the respective cores 65 are short. Thus, as compared with the case where the primary molded portion is formed with no resin entering spaces 64, the amount of shrinkage of the secondary molded portion 70 individually covering the respective straight parts 62A, 62B, 62C, 62D, 62E, 63A, 63B and 63C of the respective cores 65, 65, 65 particularly can be made smaller. In this way, the squashing of the primary molded portion 61 by the secondary molded portion 70 can be suppressed. Further, since the resin entering spaces 64 substantially extending in forward and backward directions FBD particularly are formed to be larger between the adjacent cores 65, 65 than in the other parts, it is possible to further effectively divide the primary molded portion 61 and further suppress the influence of cure shrinkage in the secondary molded portion 70.

Further, since the escaping recess forming portions 230B of the slide die 220 particularly are tightly held by the pairs of tightly holding portions 69, 69 upon forming the secondary molded portion 70 in this embodiment, the width of the primary molded portion 61 in the lateral direction LD can be shortened and the thickening of the primary molded portion 61 in the lateral direction LD can be suppressed as compared with the case where pairs of tightly holding portions for tightly holding the nut accommodating portion forming portions 230A for forming the nut accommodating portions 55 are provided. This can further suppress the formation of voids in the primary molded portion 61.

Accordingly, to suppress displacements of cores and suppress the formation of voids and cracks in a molded resin portion, a terminal block in which one or more, particularly a plurality of conductive plates 10 connected to one or more respective device-side busbars provided in a device such as a motor are made integral by a connector housing 50 made of synthetic resin includes one or more, particularly a plurality of cores 65 in which the conductive plates 10 are made integral to a primary molded portion 61; a metal plate 30 to be attached and fixed to a motor case; and a secondary molded portion 70 integrally or unitarily forming the plurality of cores 65 particularly held in contact substantially side by side and the metal plate 30. A contact portion 66 is provided between a pair of adjacent cores 65, 65 and the pair of adjacent cores 65, 65 are held in contact via the contact portion 66.

### <First Modification>

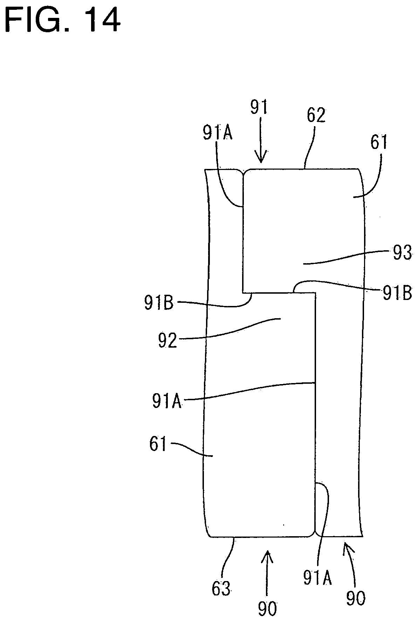

Next, a first modification of the contact portion 66 in the above embodiment is described with reference to FIG. 14.

In the first modification, the shapes of the first linking portion 67 and/or the second linking portion 68 of the contact portion 66 in the above embodiment are changed. The constructions, functions and effects common or similar to the above embodiment are not described to avoid repeated description. Further, the similar or same constructions as in the above embodiment are identified by the same reference numerals.

The resin entering spaces 64 are not formed between adjacent cores 90, 90 in the first modification, and part or all first surfaces 91A of a first linking portion 92 and a second linking portion 93 of a contact portion 91 extend up to the front and rear end surfaces 62, 63 of the primary molded portion 61. Accordingly, as compared with the case where the lengths of the first surfaces 91 A in forward and backward directions FBD are short, the area of the adjacent cores 90, 90 held in contact in the lateral direction LD can be increased, and all the cores 90 can be made integral or unitary by connecting the adjacent cores 90 over a larger area. This can more suppress displacements of the respective cores 90 in the injection direction of the molding resin.

### <Second Modification>

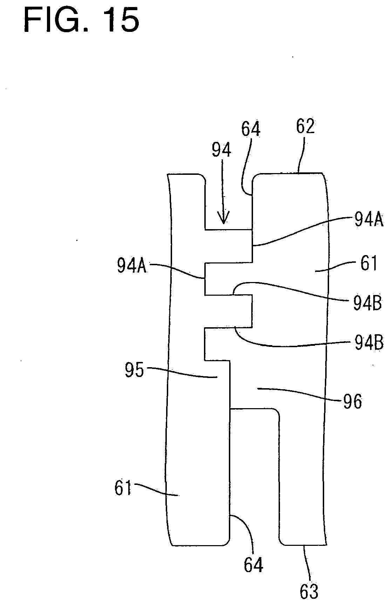

Next, a second modification of the contact portion 66 in the above embodiment is described with reference to FIG. 15.

In the second modification, the shapes of the first linking portion 67 and/or the second linking portion 68 of the contact portion 66 in the above embodiment are changed. The constructions, functions and effects common or similar to the above embodiment are not described to avoid repeated description. Further, the similar or same constructions as in the above embodiment are identified by the same reference numerals.

Parts of a first linking portion 95 and/or a second linking portion 96 of a contact portion 94 in the second modification which substantially come into surface contact with each other are in the shape of saw blades, and particularly include each a plurality of first surfaces 94A displaced in the lateral direction LD and a plurality of second surfaces 94B connecting between the first surfaces 94A. The first linking portion 95 and the second linking portion 96 are connected by mating engagement, which can suppress displacements of the respective cores 65, 65, 65 not only in the injection direction of the molding resin, but also in (particularly both) clockwise and/or counterclockwise rotational directions resulting from the injection pressure of the molding resin.

### <Third Modification>

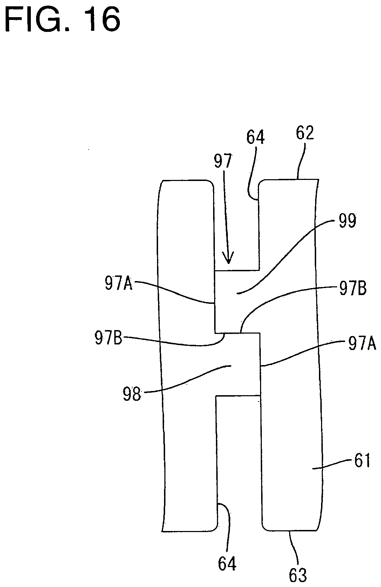

Next, a third modification of the contact portion 66 in the above embodiment is described with reference to FIG. 16.

In the third modification, the shapes of the first linking portion 67 and/or the second linking portion 68 of the contact portion 66 in the above embodiment are changed. The constructions, functions and effects common or similar to the above embodiment are not described to avoid repeated description. Further, the similar or same constructions as in the above embodiment are identified by the same reference numerals.

Parts of a first linking portion 98 and/or a second linking portion 99 of a contact portion 97 in the third modification which substantially come into surface contact with each other substantially are in the form of projections each defined by a first surface 97A at an angle different from 0° or 180°, preferably substantially perpendicular to the injection direction of the molding resin and second surfaces 97B perpendicular to the first surface 97A. The first and second linking portions 98, 99 form the contact portion 97 particularly by bringing the projecting parts thereof into surface contact to form a cranked shape in forward and backward directions FBD and lateral direction LD, and the adjacent cores 65, 65 can be held in contact via the contact portion 97 so that the respective cores 65, 65, 65 are not displaced in the injection direction and clockwise direction by the injection pressure of the molding resin. Further, similar to the above embodiment, the cores 65 particularly can be set only by bringing the first and second linking portions 98, 99 into contact in forward and backward directions FBD and/or lateral direction LD when the respective cores 65, 65, 65 are set in the lower die 210 for secondary molding, wherefore an assembling process can be simplified.

### <Fourth Modification>

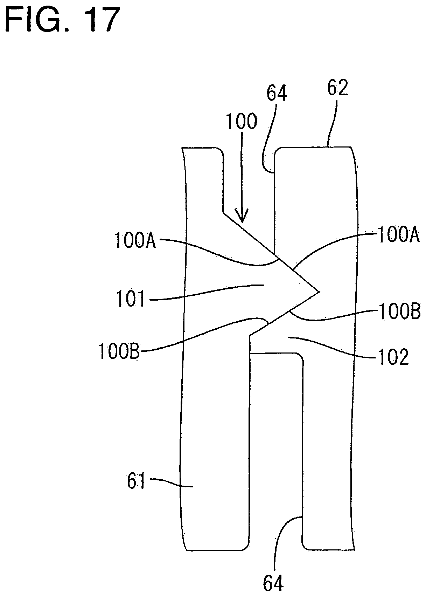

Next, a fourth modification of the contact portion 66 in the above embodiment is described with reference to FIG. 17.

In the fourth modification, the shapes of the first linking portion 67 and/or the second linking portion 68 of the contact portion 66 in the above embodiment are changed. The constructions, functions and effects common or similar to the above embodiment are not described to avoid repeated description. Further, the similar or same constructions as in the above embodiment are identified by the same reference numerals.

Parts of a first linking portion 101 and/or a second linking portion 102 of a contact portion 100 in the fourth modification which substantially come into surface contact with each other include each a first surface 100A inclined (e.g. downward to the right) to intersect with the injection direction of the molding resin and/or a second surface 100B intersecting with the first surface 100A and inclined (e.g. upward to the right) to intersect with the injection direction, the first linking portion 101 particularly is in the form of a substantially triangular projection, and the second linking portion 102 is in the form of a substantially triangular recess. The first and second linking portions 101, 102 particularly come into surface contact with each other in an oblique direction by mating engagement, which can suppress displacements of the respective cores 65, 65, 65 not only in the injection direction of the molding resin, but also in both clockwise and counterclockwise rotational directions resulting from the injection pressure of the molding resin.

### <Other Embodiments>

The present invention is not limited to the above described and illustrated embodiment. For example, the following embodiments are also included in the technical scope of the present invention.
(1) Although the adjacent cores 65, 65 are held in contact by one contact portion in the above embodiment, the present invention is not limited to such a mode. For example, the adjacent cores may be held in contact by a plurality of contact portions.
(2) Although the terminal block includes the shielding shell 80 in the above embodiment, the present invention is not limited to such a mode. For example, the present invention may be applied to a terminal block which requires no shielding shell.
(3) Although the connector housing 50 is formed with the primary molded portion 61 penetrating through the opening 31 of the metal plate 30 in the above embodiment, the present invention is not limited to such a mode. For example, the primary molded portion 61 may not penetrate through the opening 31 of the metal plate 30.

### LIST OF REFERENCE NUMERALS

- 10:: conductive plate (conductor)
- 30:: metal plate
- 50:: connector housing (molded resin portion)
- 61:: primary molded portion
- 64:: resin entering space
- 65, 90:: core
- 66, 91, 94, 97, 100:: contact portion
- 66A, 91 A, 94A, 97A, 100A:: first surface (first intersecting surface)
- 66B, 91 B, 94B, 97B, 100B:: second surface (second intersecting surface)
- 70:: secondary molded portion
- 200:: upper die (secondary molding die)
- 210:: lower die (secondary molding die)
- 220:: slide die (secondary molding die)

## Claims

1. A device connector in which a plurality of metal conductors (10) to be connected to device-side terminals provided in a device are made integral by a molded resin portion (50) made of synthetic resin, comprising:
a plurality of cores (65; 90) in which the conductors (10) are made integral to a primary molded portion (61), the primary molded portion (61) having a front end surface (62) extending substantially straight in a lateral direction (LD);
a metal plate (30) to be attached and fixed to the device; and
a secondary molded portion (70) integrally forming the plurality of cores (65; 90) held in contact substantially side by side and the metal plate (30);
wherein:
the molded resin portion (50) comprises the primary molded portion (61) and the secondary molded portion (70); and
a contact portion (66; 91; 94; 97; 100) is provided between a pair of adjacent cores (65; 90) and the pair of adjacent cores (65; 90) are held in contact via the contact portion (66; 91; 94; 97; 100) in two or more directions including an injection direction of molding resin, wherein the contact portion (66; 91; 94; 97; 100) is formed between the pair of adjacent cores (65; 90) while a resin entering space (64) into which the molding resin for forming the secondary molded portion (70) can at least partly enter is formed therebetween to extend in a forward and backward direction (FBD) crossing an arrangement direction of the conductors (10), the contact portion (66; 91; 94; 97; 100) being formed at a back end of the resin entering space (64) such that a straight part of the front end surface (62) of the primary molded portion (61) is divided by the resin entering space (64).

2. A device connector according to claim 1, wherein parts of the contact portion (66; 91; 94; 97; 100) which come into contact with each other are each formed by a first intersecting surface (66A; 91A; 94A; 97A; 100A) intersecting with the injection direction and a second intersecting surface (66B; 91B; 94B; 97B; 100B) extending in the injection direction.

3. A device connector according to claim 2, wherein the first intersecting surfaces (66A; 91 A; 94A; 97A; 100A) of the pair of adjacent cores (65; 90) substantially come into surface contact with each other and/or the second intersecting surfaces (66B; 91B; 94B; 97B; 100B) thereof substantially come into surface contact with each other when the molding resin for forming the secondary molded portion (70) is injected into a secondary molding die (200; 210; 220).

4. A device connector according to claim 2 or 3, wherein the parts of the contact portion (66; 91; 94; 97; 100) that come into contact with each other are each formed into a cranked shape by connecting the first intersecting surface (66A; 91A; 94A; 97A; 100A) and the second intersecting surface (66B; 91B; 94B; 97B; 100B).

5. A device connector according to any one of the preceding claims, wherein at least one resin entering space (64), into which molding resin for forming the secondary molded portion (70) can enter, is arranged to cross a straight part of the primary molded portion (61) extending in an arrangement direction (AD) of the conductors (10) in the primary molded portion (61) before the secondary molded portion (70) is formed.

6. A device connector according to any one of the preceding claims, wherein the resin entering space (64) is at least partly formed between a pair of adjacent conductors (10).

7. A production method for producing a device connector in which a plurality of metal conductors (10) connected to device-side terminals provided in a device are made integral by a molded resin portion (50) comprising a primary molded portion (61) and a secondary molded portion (70), comprising the following steps:
molding a plurality of cores (65; 90) in which the conductors (10) are made integral to the primary molded portion (61), the primary molded portion (61) having a front end surface (62) extending substantially straight in a lateral direction (LD); and
molding the secondary molded portion (70) integrally forming the plurality of cores (65; 90) held in contact substantially side by side and a metal plate (30) to be attached and fixed to the device;
wherein a contact portion (66; 91; 94; 97; 100) is provided between a pair of adjacent cores (65; 90) and the pair of adjacent cores (65; 90) are held in contact via the contact portion (66; 91; 94; 97; 100) in two or more directions including an injection direction of molding resin, wherein the contact portion (66; 91; 94; 97; 100) is formed between the pair of adjacent cores (65; 90) while a resin entering space (64) into which the molding resin for forming the secondary molded portion (70) can at least partly enter is formed therebetween to extend in a forward and backward direction (FBD) crossing an arrangement direction of the conductors (10), the contact portion (66; 91; 94; 97; 100) being formed at a back end of the resin entering space (64) such that a straight part of the front end surface (62) of the primary molded portion (61) is divided by the resin entering space (64).

8. A method according to claim 7, wherein parts of the contact portion (66; 91; 94; 97; 100) which come into contact with each other are each formed by a first intersecting surface (66A; 91 A; 94A; 97A; 100A) intersecting with the injection direction and a second intersecting surface (66B; 91B; 94B; 97B; 100B) extending in the injection direction.

9. A method according to claim 8, wherein the first intersecting surfaces (66A; 91A; 94A; 97A; 100A) of the pair of adjacent cores (65; 90) substantially come into surface contact with each other and/or the second intersecting surfaces (66B; 91B; 94B; 97B; 100B) thereof substantially come into surface contact with each other when the molding resin for forming the secondary molded portion (70) is injected into a secondary molding die (200; 210; 220).

10. A method according to claim 9 or 10, wherein the parts of the contact portion (66; 91; 94; 97; 100) that come into contact with each other are each formed into a cranked shape by connecting the first intersecting surface (66A; 91 A; 94A; 97A; 100A) and the second intersecting surface (66B; 91B; 94B; 97B; 100B).

11. A method according to any one of the preceding claims 7 to 10, wherein at least one resin entering space (64), into which molding resin for forming the secondary molded portion (70) can enter, is arranged to cross a straight part of the primary molded portion (61) extending in an arrangement direction (AD) of the conductors (10) in the primary molded portion (61) before the secondary molded portion (70) is formed.

12. A method according to any one of the preceding claims 7 to 11, wherein the resin entering space (64) is at least partly formed between a pair of adjacent conductors (10).

## Patentansprüche

1. Vorrichtungsverbinder, bei dem eine Mehrzahl von Metallleitern (10), die mit vorrichtungsseitigen Anschlüssen zu verbinden sind, die in einer Vorrichtung bereitgestellt sind, durch einen geformten Harzabschnitt (50) aus Kunstharz integral bzw. einstückig gemacht sind, umfassend:
eine Mehrzahl von Kernen (65; 90), in denen die Leiter (10) integral bzw. einstückig zu bzw. mit einem primären geformten Abschnitt (61) gemacht sind, wobei der primäre geformte Abschnitt (61) eine vordere Endfläche bzw. - oberfläche (62) aufweist, die sich im Wesentlichen gerade in einer lateralen Richtung (LD) erstreckt;
eine Metallplatte (30), die an der Vorrichtung anzubringen und zu fixieren bzw. zu befestigen ist; und
einen sekundären geformten Abschnitt (70), der die Mehrzahl von Kernen (65; 90), die im Wesentlichen Seite an Seite in Kontakt gehalten sind, und die Metallplatte (30) integral bzw. einstückig bildet;
wobei:
der geformte Harzabschnitt (50) den primären geformten Abschnitt (61) und den sekundären geformten Abschnitt (70) umfasst; und
ein Kontaktabschnitt (66; 91; 94; 97; 100) zwischen einem Paar angrenzender bzw. benachbarter Kerne (65; 90) bereitgestellt ist und das Paar angrenzende an bzw. benachbarte Kerne (65; 90) über den Kontaktabschnitt (66; 91; 94; 97; 100) in zwei oder mehr Richtungen, einschließlich einer Einspritzrichtung des Formharzes, in Kontakt gehalten sind, wobei der Kontaktabschnitt (66; 91; 94; 97; 100) zwischen dem Paar angrenzender bzw. benachbarter Kerne (65; 90) gebildet ist, während ein Harzeintrittsraum (64), in den das Formharz zum Bilden des sekundären geformten Abschnitts (70) zumindest teilweise eintreten kann, dazwischen gebildet ist, um sich in einer Vorwärts-Rückwärts-Richtung (FBD) zu erstrecken, die eine Anordnungsrichtung der Leiter (10) kreuzt, wobei der Kontaktabschnitt (66; 91; 94; 97; 100) an einem hinteren Ende des Harzeintrittsraums (64) gebildet ist, so dass ein gerader Teil der vorderen Endfläche (62) des primären geformten Abschnitts (61) durch den Harzeintrittsraum (64) geteilt ist.

2. Vorrichtungsverbinder nach Anspruch 1, wobei Teile des Kontaktabschnitts (66; 91; 94; 97; 100), die miteinander in Kontakt kommen, jeweils durch eine erste Schnittfläche bzw. -oberfläche (66A; 91A; 94A; 97A; 100A), die sich mit der Einspritzrichtung schneidet, und einer zweiten Schnittfläche bzw. - oberfläche (66B; 91B; 94B; 97B; 100B) gebildet sind, die sich in der Einspritzrichtung erstreckt.

3. Vorrichtungsverbinder nach Anspruch 2, wobei die ersten Schnittflächen (66A; 91A; 94A; 97A; 100A) des Paars angrenzender Kerne (65; 90) im Wesentlichen miteinander in Flächen- bzw. Oberflächenkontakt kommen und/oder die zweiten Schnittflächen (66B; 91B; 94B; 97B; 100B) davon im Wesentlichen miteinander in Flächen- bzw. Oberflächenkontakt kommen, wenn das Formharz zum Bilden des sekundären geformten Abschnitts (70) in eine sekundäre Spritzform (200; 210; 220) eingespritzt wird.

4. Vorrichtungsverbinder nach Anspruch 2 oder 3, wobei die Teile des Kontaktabschnitts (66; 91; 94; 97; 100), die miteinander in Kontakt kommen, jeweils in einer gekröpften bzw. gekrümmten Form gebildet sind, und zwar durch Verbinden der ersten Schnittfläche (66A; 91A; 94A; 97A; 100A) und der zweiten Schnittfläche (66B; 91B; 94B; 97B; 100B).

5. Vorrichtungsverbinder nach einem der vorhergehenden Ansprüche, wobei zumindest ein Harzeintrittsraum (64), in den Formharz zum Bilden des sekundären geformten Abschnitts (70) eintreten kann, so angeordnet ist, dass er einen geraden Teil des primären geformten Abschnitts (61) kreuzt, der sich in einer Anordnungsrichtung (AD) der Leiter (10) in dem primären geformten Abschnitt (61) erstreckt, bevor der sekundäre geformte Abschnitt (70) gebildet ist.

6. Vorrichtungsverbinder nach einem der vorhergehenden Ansprüche, wobei der Harzeintrittsraum (64) zumindest teilweise zwischen einem Paar angrenzender bzw. benachbarter Leiter (10) gebildet ist.

7. Herstellungsverfahren zum Herstellen eines Vorrichtungsverbinders, bei dem eine Mehrzahl von Metallleitern (10), die mit vorrichtungsseitigen Anschlüssen zu verbinden sind, die in einer Vorrichtung bereitgestellt sind, durch einen geformten Harzabschnitt (50) aus Kunstharz, der einen primären geformten Abschnitt (61) und einen sekundären geformten Abschnitt (70) umfasst, integral bzw. einstückig gemacht sind, umfassend die folgenden Schritte:
Formen einer Mehrzahl von Kernen (65; 90), in denen die Leiter (10) integral bzw. einstückig zu bzw. mit einem primären geformten Abschnitt (61) gemacht sind, wobei der primäre geformte Abschnitt (61) eine vordere Endfläche bzw. - oberfläche (62) aufweist, die sich im Wesentlichen gerade in einer lateralen Richtung (LD) erstreckt; und
Formen des sekundären geformten Abschnitts (70), der die Mehrzahl von Kernen (65; 90), die im Wesentlichen Seite an Seite in Kontakt gehalten sind, und eine Metallplatte (30), die an der Vorrichtung anzubringen und zu fixieren bzw. zu befestigen ist, integral bzw. einstückig bildet;
wobei ein Kontaktabschnitt (66; 91; 94; 97; 100) zwischen einem Paar angrenzender bzw. benachbarter Kerne (65; 90) bereitgestellt wird und das Paar angrenzende an bzw. benachbarte Kerne (65; 90) über den Kontaktabschnitt (66; 91; 94; 97; 100) in zwei oder mehr Richtungen, einschließlich einer Einspritzrichtung des Formharzes, in Kontakt gehalten werden, wobei der Kontaktabschnitt (66; 91; 94; 97; 100) zwischen dem Paar angrenzender bzw. benachbarter Kerne (65; 90) gebildet wird, während ein Harzeintrittsraum (64), in den das Formharz zum Bilden des sekundären geformten Abschnitts (70) zumindest teilweise eintreten kann, dazwischen gebildet wird, um sich in einer Vorwärts-Rückwärts-Richtung (FBD) zu erstrecken, die eine Anordnungsrichtung der Leiter (10) kreuzt, wobei der Kontaktabschnitt (66; 91; 94; 97; 100) an einem hinteren Ende des Harzeintrittsraums (64) gebildet wird, so dass ein gerader Teil der vorderen Endfläche (62) des primären geformten Abschnitts (61) durch den Harzeintrittsraum (64) geteilt wird.

8. Verfahren nach Anspruch 7, wobei Teile des Kontaktabschnitts (66; 91; 94; 97; 100), die miteinander in Kontakt kommen, jeweils durch eine erste Schnittfläche bzw. -oberfläche (66A; 91A; 94A; 97A; 100A), die sich mit der Einspritzrichtung schneidet, und einer zweiten Schnittfläche bzw. -oberfläche (66B; 91B; 94B; 97B; 100B) gebildet werden, die sich in der Einspritzrichtung erstreckt.

9. Verfahren nach Anspruch 8, wobei die ersten Schnittflächen (66A; 91A; 94A; 97A; 100A) des Paars angrenzender Kerne (65; 90) im Wesentlichen miteinander in Flächen- bzw. Oberflächenkontakt kommen und/oder die zweiten Schnittflächen (66B; 91B; 94B; 97B; 100B) davon im Wesentlichen miteinander in Flächen- bzw. Oberflächenkontakt kommen, wenn das Formharz zum Bilden des sekundären geformten Abschnitts (70) in eine sekundäre Spritzform (200; 210; 220) eingespritzt wird.

10. Verfahren nach Anspruch 9 oder 10, wobei die Teile des Kontaktabschnitts (66; 91; 94; 97; 100), die miteinander in Kontakt kommen, jeweils in einer gekröpften bzw. gekrümmten Form gebildet werden, und zwar durch Verbinden der ersten Schnittfläche (66A; 91A; 94A; 97A; 100A) und der zweiten Schnittfläche (66B; 91B; 94B; 97B; 100B).

11. Verfahren nach einem der vorhergehenden Ansprüche 7 bis 10, wobei zumindest ein Harzeintrittsraum (64), in den Formharz zum Bilden des sekundären geformten Abschnitts (70) eintreten kann, so angeordnet wird, dass er einen geraden Teil des primären geformten Abschnitts (61) kreuzt, der sich in einer Anordnungsrichtung (AD) der Leiter (10) in dem primären geformten Abschnitt (61) erstreckt, bevor der sekundäre geformte Abschnitt (70) gebildet wird.

12. Verfahren nach einem der vorhergehenden Ansprüche 7 bis 11, wobei der Harzeintrittsraum (64) zumindest teilweise zwischen einem Paar angrenzender bzw. benachbarter Leiter (10) gebildet wird.

## Revendications

1. Connecteur de dispositif dans lequel une pluralité de conducteurs métalliques (10) devant être connectés à des bornes côté dispositif prévues dans un dispositif sont rendus partie intégrante par une portion de résine moulée (50) réalisée en résine synthétique, comprenant :
une pluralité de noyaux (65 ; 90) dans lesquels les conducteurs (10) sont rendus partie intégrante à une portion moulée primaire (61), la portion moulée primaire (61) ayant une surface d'extrémité avant (62) s'étendant essentiellement en ligne droite dans une direction latérale (LD) ;
une plaque métallique (30) devant être reliée et fixée au dispositif ; et
une portion moulée secondaire (70) formant intégralement la pluralité de noyaux (65 ; 90) maintenus en contact essentiellement côte à côte et la plaque métallique (30) ;
dans lequel :
la portion de résine moulée (50) comprend la portion moulée primaire (61) et la portion moulée secondaire (70) ; et
une portion de contact (66 ; 91 ; 94 ; 97 ; 100) est prévue entre une paire de noyaux adjacents (65 ; 90) et la paire de noyaux adjacents (65 ; 90) sont maintenus en contact par le biais de la portion de contact (66 ; 91 ; 94 ; 97 ; 100) dans deux directions ou plus y compris une direction d'injection de résine de moulage, dans lequel la portion de contact (66 ; 91 ; 94 ; 97 ; 100) est formée entre la paire de noyaux adjacents (65 ; 90) tandis qu'un espace de pénétration de résine (64) dans lequel la résine de moulage pour former la portion moulée secondaire (70) peut au moins partiellement pénétrer est formé entre eux pour s'étendre dans une direction avant et arrière (FBD) croisant une direction d'agencement des conducteurs (10), la portion de contact (66 ; 91 ; 94 ; 97 ; 100) étant formée à une extrémité arrière de l'espace de pénétration de résine (64) de sorte qu'une partie droite de la surface d'extrémité avant (62) de la portion moulée primaire (61) est divisée par l'espace de pénétration de résine (64).

2. Connecteur de dispositif selon la revendication 1, dans lequel des parties de la portion de contact (66 ; 91 ; 94 ; 97 ; 100) qui viennent en contact les unes avec les autres sont chacune formées par une première surface d'intersection (66A ; 91A ; 94A ; 97A ; 100A) coupant la direction d'injection et une seconde surface d'intersection (66B ; 91B ; 94B ; 97B ; 100B) s'étendant dans la direction d'injection.

3. Connecteur de dispositif selon la revendication 2, dans lequel les premières surfaces d'intersection (66A ; 91A ; 94A ; 97A ; 100A) de la paire de noyaux adjacents (65 ; 90) viennent essentiellement en contact de surface les unes avec les autres et/ou les secondes surfaces d'intersection (66B ; 91B ; 94B ; 97B ; 100B) de ceux-ci viennent essentiellement en contact de surface les unes avec les autres lorsque la résine de moulage pour former la portion moulée secondaire (70) est injectée dans une filière de moulage secondaire (200 ; 210 ; 220).

4. Connecteur de dispositif selon la revendication 2 ou 3, dans lequel les parties de la portion de contact (66 ; 91 ; 94 ; 97 ; 100) qui viennent en contact les unes avec les autres sont chacune formées en une forme coudée en connectant la première surface d'intersection (66A ; 91A ; 94A ; 97A ; 100A) et la seconde surface d'intersection (66B ; 91B ; 94B ; 97B ; 100B).

5. Connecteur de dispositif selon l'une quelconque des revendications précédentes, dans lequel au moins un espace de pénétration de résine (64) dans lequel de la résine de moulage pour former la portion moulée secondaire (70) peut pénétrer est agencé pour croiser une partie droite de la portion moulée primaire (61) s'étendant dans une direction d'agencement (AD) des conducteurs (10) dans la portion moulée primaire (61) avant formation de la portion moulée secondaire (70).

6. Connecteur de dispositif selon l'une quelconque des revendications précédentes, dans lequel l'espace de pénétration de résine (64) est au moins partiellement formé entre une paire de conducteurs adjacents (10).

7. Procédé de production pour produire un connecteur de dispositif dans lequel une pluralité de conducteurs métalliques (10) connectés à des bornes côté dispositif prévues dans un dispositif sont rendus partie intégrante par une portion de résine moulée (50) comprenant une portion moulée primaire (61) et une portion moulée secondaire (70), comprenant les étapes suivantes :
mouler une pluralité de noyaux (65 ; 90) dans lesquels les conducteurs (10) sont rendus partie intégrante à la portion moulée primaire (61), la portion moulée primaire (61) ayant une surface d'extrémité avant (62) s'étendant essentiellement en ligne droite dans une direction latérale (LD) ; et
mouler la portion moulée secondaire (70) formant intégralement la pluralité de noyaux (65 ; 90) maintenus en contact essentiellement côte à côte et une plaque métallique (30) devant être reliée et fixée au dispositif ;
dans lequel une portion de contact (66 ; 91 ; 94 ; 97 ; 100) est prévue entre une paire de noyaux adjacents (65 ; 90) et la paire de noyaux adjacents (65 ; 90) sont maintenus en contact par le biais de la portion de contact (66 ; 91 ; 94 ; 97 ; 100) dans deux directions ou plus y compris une direction d'injection de résine de moulage, dans lequel la portion de contact (66 ; 91 ; 94 ; 97 ; 100) est formée entre la paire de noyaux adjacents (65 ; 90) tandis qu'un espace de pénétration de résine (64) dans lequel la résine de moulage pour former la portion moulée secondaire (70) peut au moins partiellement pénétrer est formé entre eux pour s'étendre dans une direction avant et arrière (FBD) croisant une direction d'agencement des conducteurs (10), la portion de contact (66 ; 91 ; 94 ; 97 ; 100) étant formée à une extrémité arrière de l'espace de pénétration de résine (64) de sorte qu'une partie droite de la surface d'extrémité avant (62) de la portion moulée primaire (61) est divisée par l'espace de pénétration de résine (64).

8. Procédé selon la revendication 7, dans lequel des parties de la portion de contact (66 ; 91 ; 94 ; 97 ; 100) qui viennent en contact les unes avec les autres sont chacune formées par une première surface d'intersection (66A ; 91A ; 94A ; 97A; 100A) coupant la direction d'injection et une seconde surface d'intersection (66B; 91B; 94B; 97B; 100B) s'étendant dans la direction d'injection.

9. Procédé selon la revendication 8, dans lequel les premières surfaces d'intersection (66A ; 91A ; 94A ; 97A ; 100A) de la paire de noyaux adjacents (65 ; 90) viennent essentiellement en contact de surface les unes avec les autres et/ou les secondes surfaces d'intersection (66B ; 91B ; 94B ; 97B ; 100B) de ceux-ci viennent essentiellement en contact de surface les unes avec les autres lorsque la résine de moulage pour former la portion moulée secondaire (70) est injectée dans une filière de moulage secondaire (200 ; 210 ; 220).

10. Procédé selon la revendication 9 ou 10, dans lequel les parties de la portion de contact (66 ; 91 ; 94 ; 97 ; 100) qui viennent en contact les unes avec les autres sont chacune formées en une forme coudée en connectant la première surface d'intersection (66A; 91A; 94A; 97A; 100A) et la seconde surface d'intersection (66B ; 91B ; 94B ; 97B ; 100B).

11. Procédé selon l'une quelconque des revendications précédentes 7 à 10, dans lequel au moins un espace de pénétration de résine (64) dans lequel de la résine de moulage pour former la portion moulée secondaire (70) peut pénétrer est agencé pour croiser une partie droite de la portion moulée primaire (61) s'étendant dans une direction d'agencement (AD) des conducteurs (10) dans la portion moulée primaire (61) avant formation de la portion moulée secondaire (70).

12. Procédé selon l'une quelconque des revendications précédentes 7 à 11, dans lequel l'espace de pénétration de résine (64) est au moins partiellement formé entre une paire de conducteurs adjacents (10).
